# EUROPÄISCHE PATENTSCHRIFT

(11) **EP 0 534 274 B1**
(45) Veröffentlichungstag und Bekanntmachung des Hinweises auf die Patenterteilung: **07.05.1997**
(21) Anmeldenummer: 92115716.0
(22) Anmeldetag: 14.09.1992
(51) Int. Cl.: G09B 23/18

(54) **Lehrsystem für Elektronik und Elektrotechnik**
Teaching system for electronics and electrical engineering
Système didactique pour l'électronique et l'électrotechnique

(30) Priorität: 27.09.1991 DE 4132312
(43) Veröffentlichungstag der Anmeldung: 31.03.1993
(73) Patentinhaber: SIEMENS AKTIENGESELLSCHAFT, 80333 München (DE)
(72) Erfinder: Acksteiner, Fritz, W-8900 Augsburg (DE)

(56) Entgegenhaltungen:
- WO-A-91/08561
- DE-A- 2 939 083
- FR-A- 2 529 360
- FR-A- 2 636 759
- US-A- 4 943 238

## Beschreibung

Die Erfindung bezieht sich auf ein Lehrsystem für Elektronik und Elektrotechnik.

Der Wunsch, während des Theorieunterrichts Auszubildende selbst experimentieren und messen zu lassen, scheitert sehr häufig an großen, kostenintensiven Installationen und umfangreichen Vorbereitungen von seiten des Lehrers.

Ein Ansatz zur Lösung dieses Problems besteht in Elektroniklernkoffern, in denen die für die Versuche benötigten Elektronikbauteile und Zubehör aufbewahrt werden (vgl. z.B. Deutsches Gebrauchsmuster 72 21 048).

Eine weitere Arbeitserleichterung ergibt sich dadurch, wenn ein Lehrgerät verwendet wird, das ein Stöpselfeld aufweist, auf welches vorbereitete Schaltungsvorlagen auflegbar sind und in welches Schulbausteine einsteckbar sind. Unterhalb des Stöpselfeldes sind die einzelnen Buchsen derart verdrahtet und ist die Verdrahtung derart mit Bauelementen bestückt, daß beim Einsetzen von Schulbausteinen nach der Schaltungsvorlage eine komplette Schaltung entsteht, mit welcher Schulungsversuche durchgeführt werden können (vgl. z.B. Deutsches Gebrauchsmuster 72 17 824). Die bekannten Geräte enthalten zwar Komponenten, die die Arbeit erleichtern, insgesamt gesehen, ist jedoch noch kein System bekannt, welches auf einfache Weise die individuelle Versuchsdurchführung durch die Schüler ermöglicht, aber andererseits hinsichtlich Betriebsbereitschaft und ordnungsgemäßem Zustand gut überprüfbar ist.

Die Aufgabe der vorliegenden Erfindung besteht demgemäß darin, ein Lehrsystem für die Elektrotechnik zum Gebrauch im Unterricht zu schaffen, bei dem Geräte individuell für Schüler oder Schülergruppen netzunabhängig zur Verfügung stehen, aber andererseits auch die ständige Betriebsbereitschaft und leichte Überwachbarkeit gesichert ist.

Die Lösung dieser Aufgabe besteht in einem Lehrsystem, bei dem
a) eine Vielzahl von tragbaren elektronischen Lehrkoffern vorgesehen ist,
b) mindestens ein Schrank oder ein Regal vorhanden ist, in welches die Lehrkoffer geordnet einstellbar sind,
c) die Lehrkoffer mit wiederaufladbaren elektrischen Batterien betreibbar sind und
d) die Lehrkoffer durch das Einstellen in den Schrank an eine elektrische Nachladeeinrichtung für die Batterien anschließbar sind.

Hervorragend geeignet für ein derartiges Lehrsystem ist ein Lehrkoffer in dem:
a) vorverdrahtete Schaltungen mit durch eine Abdeckplatte geführte Kontaktbuchsen angeordnet sind,
b) wechselbare, auf die Abdeckplatte auflegbare Abdeckschablonen vorgesehen sind, durch die nur die für den jeweiligen Versuch benötigten Kontaktbuchsen freigebbar sind und
c) elektrische, mit Symbolen versehene Bausteine vorgesehen sind, die in die Kontaktbuchsen einsteckbar sind und zusammen mit der Abdeckschablone eine optisches Abbild der jeweiligen Versuchsschaltung ergeben.

Auf diese Weise ist man netzunabhängig, eine Verdrahtung ist nicht mehr notwendig und Schaltung und Schaltbild sind identisch.

Das ordnungsgemäße Einstellen der Lehrkoffer in den Schrank, z.B. für das Nachladen, läßt sich auf einfache Weise dadurch überprüfen, daß nur dann z.B. die Schranktür geschlossen werden kann, wenn alle Koffer richtig eingeordnet sind. Möglich ist jedoch auch eine elektrische oder elektronische Überwachung der Koffer. Damit keine unnötige Entladung der Batterien stattfindet, wird vorteilhafterweise die elektrische Stromversorgung jeweils beim Schließen des Deckels des Lehrkoffers selbsttätig ausgeschaltet, z.B. mit Hilfe eines entsprechenden Endschalters.

Da auch nicht immer damit zu rechnen ist, daß die Versuche am Anfang korrekt durchgeführt werden, sind vorteilhafterweise ferner im Lehrkoffer Stromversorgung und elektrische Bausteine gegen Überlastung geschützt. Wie bereits bemerkt, ist der große Vorteil des Lehrsystems in der Unabhängigkeit vom Netz während der Versuche zu sehen. Falls eine entsprechende Installation jedoch vorgesehen ist, ist es ohne weiteres auch denkbar, über eine gesonderte Buchse den Lehrkoffer mit einem Netzgerät oder aus einem Netzgerät zu betreiben.

In einer weiteren Ausbaustufe kann es von Vorteil sein, wenn neben dem relativ einfachen Schaltungsaufbau auch noch Meßgeräte und/oder ein Display zur Anzeige von Kurven oder dergleichen während der Versuche vorhanden sind. Auf diese Weise lassen sich insbesondere Strom- und Spannungsverläufe in der Wechselstromtechnik oder auch in der digitalen Impulstechnik sehr gut darstellen.

Das vorstehend erwähnte Gerät ist universell einsetzbar, da durch Abändern der Vorverdrahtung und der Folien das System verschiedensten Unterrichtszwecken angepaßt werden kann. So können z.B. mit diesem Lehrsystem die Grundlagen der Elektrotechnik, der Elektronik, der Analogtechnik, der Digitaltechnik, der Wechselstromtechnik und Meßtechnik für Elektrotechniker, Maschinenbauer und Kraftfahrzeugtechniker vermittelt werden.

Anhand eines in der Zeichnung dargestellten Ausführungsbeispiels sei die Erfindung näher erläutert; es zeigen:

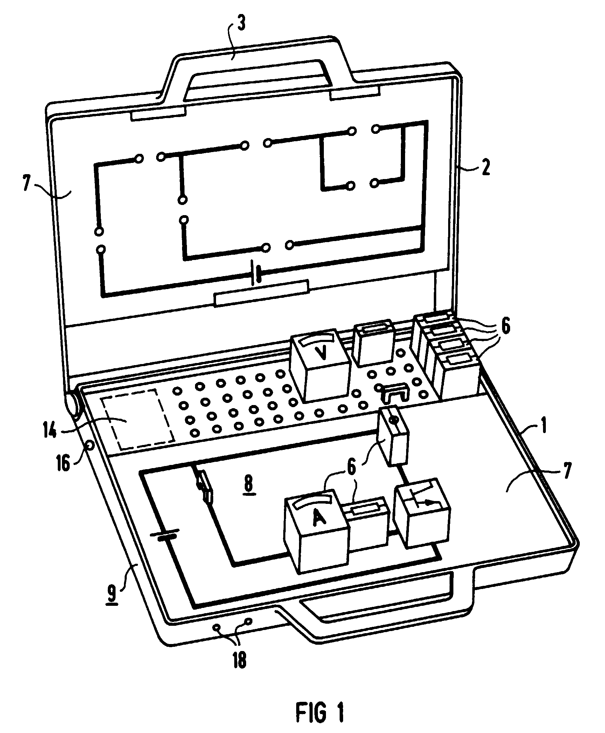

- Fig. 1: den Koffer mit Abdeckschablone,

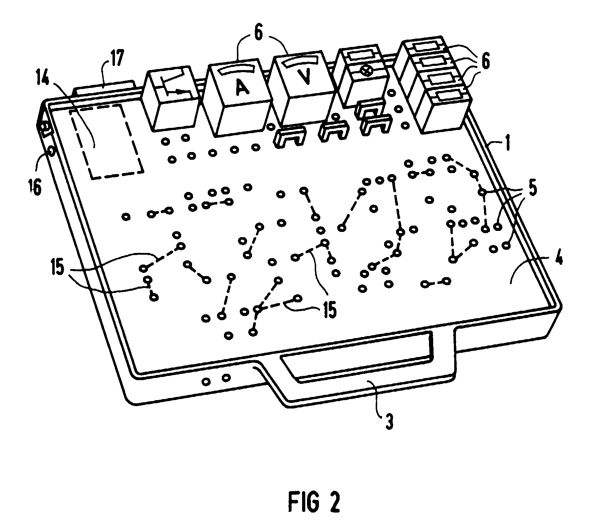

- Fig. 2: den Kofferboden ohne die Abdeckschablone,

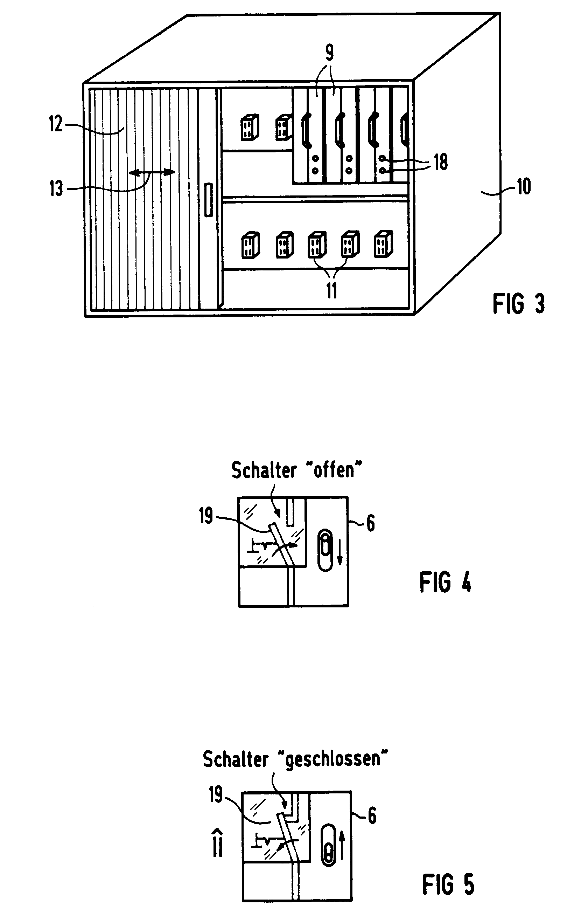

- Fig. 3: einen Schrank mit Koffern in schematischer Darstellung und
- Fig. 4 und 5: einen Schalter mit normgerechter Anzeige der Betriebszustände.

Wie aus der Zeichnung ersichtlich, besteht der Koffer 9 aus Bodenteil 1 und Deckel 2 mit Griff 3. Unter einer Abdeckplatte 4 im Bodenteil 1 sind vorverdrahtete elektrische Schaltungen angeordnet, die gestrichelt mit 15 angedeutet sind. Elektrische Punkte dieser vorverdrahteten Schaltungen sind über Kontaktbuchsen 5 durch die Abdeckplatte herausgeführt. Im Koffer sind ferner steckbare elektrische Bausteine 6 untergebracht, die z. B. Widerstände, Lampen, Meßgeräte und/oder Schalter umfassen können.

Durch das Auflegen einer Abdeckschablone 7, werden nur die Kontaktbuchsen 5 freigegeben, die für den jeweiligen Versuch benötigt werden. Die Abdeckschablonen 7 sind ebenfalls im Koffer untergebracht, und zwar im Deckel, und sind mit den entsprechenden Schaltungsaufdrucken versehen.

Durch Einstecken der Bausteine 6 in die vorgesehenen Kontaktbuchsen können im Bedarfsfall leicht die geforderten Versuchsschaltungen realisiert werden. Wie durch das Bezugszeichen 8 angedeutet, bilden die elektrischen Bausteine 6 in Verbindung mit dem Schaltungsverlauf auf der Abdeckschablone 7 ein komplettes optisches Abbild der betreffenden Versuchsschaltung.

Damit man von der Stromversorgung unabhängig ist, ist eine gestrichelt angedeutete wiederaufladbare Batterie 14 im Koffer untergebracht.

Beim Einstellen der Lehrkoffer 9 in einen Schrank 10 oder dergleichen wird selbsttätig eine elektrische Verbindung zwischen Buchsen 17 an der Kofferrückseite und der Schrankinnenwandung hergestellt, die eine automatische Nachladung der Batterien möglich machen.

Von dieser Nachladeeinrichtung sind die Kontaktstecker 11 in der Schrankrückwand angedeutet. Auch eine kontaktlose Nachladung, z.B. induktiv, ist möglich. Die Nachladung kann über ein vorhandenes elektrisches Netz erfolgen oder auch mittels Solarenergie. Hierzu kann z.B. ein Solarmodul vorgesehen sein, welches über Buchsen mit dem Schrank verbunden wird. Eine weitere, gegebenenfalls zusätzliche Nachladung kann eventuell auch dezentral durch Solarzellen an jedem Koffer vorgenommen werden.

Man kann sich auf einfache Weise von der ordnungsgemäßen Einstellung der Koffer überzeugen, z.B. in der Art, daß die in Doppelpfeilrichtung 13 bewegliche Schiebetür 12 des Schrankes 10 nur dann schließbar ist, wenn sich die Koffer in der richtigen Lage befinden, in der die Batterien geladen werden. Der Lade- und Betriebszustand wird durch Leuchtdioden 18 angezeigt.

Von Vorteil ist ferner, daß der innere Aufbau des Koffers so gewählt ist, daß sich der Kofferdeckel nur dann schließen läßt, wenn sich die einzelnen Elemente an ihren vorbestimmten Plätzen befinden. Auf diese Weise kann das Lehrpersonal sehr schnell und präzise erkennen, ob die notwendigen Aufräumarbeiten auch durchgeführt wurden.
Über eine Buchse 16 kann der Koffer 9 auch an ein Netzgerät angeschlossen werden.

Figuren 4 und 5 zeigen einen als Baustein in den Versuchsschaltungen einsetzbaren Schalter, bei dem die Betriebszustände offen bzw. geschlossen normgerecht optisch dargestellt werden, und zwar in der Weise, daß beim Öffnen des Schalters der Schaltkontakt im Symbol 19 sich öffnet und gleichzeitig der Verbindungshaken abgedeckt wird. Dies ist durch eine mit der Schaltwelle verdrehbare Anzeigescheibe relativ leicht erreichbar.

## Patentansprüche

1. Lehrsystem für Elektronik und Eletrotechnik, bei dem:
a) eine Vielzahl von tragbaren elektronischen Lehrkoffern (9) vorgesehen ist,
b) mindestens ein Schrank (10) oder ein Regal vorhanden ist, in das die Lehrkoffer (9) geordnet einstellbar sind,
c) die Lehrkoffer mit wiederaufladbaren elektrischen Batterien (14) betreibbar sind und
d) die Lehrkoffer (9) durch Einstellen in den Schrank (10) an eine elektrische Nachladevorrichtung (11) für die Batterien anschließbar sind.

2. Lehrsystem nach Anspruch 1, bei dem im Lehrkoffer (9)
a) vorverdrahtete Schaltungen mit durch eine Abdeckplatte geführten Kontaktbuchsen angeordnet sind,
b) auswechselbare, auf die Abdeckplatte (4) auflegbare Abdeckschablonen (7) vorgesehen sind, durch die nur die für den jeweiligen Versuch benötigten Kontaktbuchsen (5) freigebbar sind und
c) elektrische mit Symbolen versehene Bausteine (6) vorgesehen sind, die in die Kontaktbuchsen (5) einsteckbar sind und zusammen mit den Abdeckschablonen (7) ein optisches Abbild der jeweiligen Versuchsschaltung ergeben.

3. Lehrsystem nach Anspruch 1, bei dem das ordnungsgemäße Einstellen der Lehrkoffer (9) in den Schrank (10) überprüfbar ist.

4. Lehrsystem nach Anspruch 2, bei dem die elektrische Stromversorgung bei Schließen des Deckels des Lehrkoffers (9) selbsttätig ausgeschaltet wird.

5. Lehrsystem nach Anspruch 2, bei dem Stromversorgung (14) und elektrische Bausteine (6) gegen Überlastung geschützt sind.

6. Lehrsystem nach Anspruch 2, bei dem der Betriebs- und/oder der Ladungszustand optisch durch Leuchtdioden (15) am Lehrkoffer (9) anzeigbar ist.

7. Lehrsystem nach Anspruch 2, bei dem am Lehrkoffer (9) ein zusätzlicher Anschluß (16) für einen Betrieb über ein Netzgerät vorgesehen ist.

8. Lehrsystem nach Anspruch 2, bei dem im Lehrkoffer ein Display zur Darstellung zeitabhängiger analoger und digitaler elektrischer Größen (Minioszilloscope) und/oder ein digitales Meßgerät angeordnet sind.

9. Lehrgerät nach Anspruch 2, bei dem die Bausteine (6) bei den Grundlagenlehrkoffern mindestens einen elektrischen Schalter umfassen, der eine normgerechte optische Anzeige des Betriebszustandes aufweist.

10. Lehrgerät nach Anspruch 1, bei dem zumindest ein Teil der Nachladeenergie aus Solarzellen gewonnen ist.

11. Lehrgerät nach Anspruch 10, bei dem ein zentrales Solarmodul und/oder Solarzellen für einzelne Lehrkoffer vorgesehen sind.

## Claims

1. Teaching system for electronics and electrical engineering, in which:
a) a plurality of portable electronic training cases (9) are provided,
b) there is at least one cabinet (10) or shelf in which the training cases (9) can be placed systematically,
c) the training cases can be operated by means of rechargeable electric batteries (14), and
d) by placing the training cases (9) in the cabinet (10), they can be attached to an electric recharging device (11) for the batteries.

2. Teaching system according to claim 1, in which, in the teaching case (9):
a) there are arranged pre-wired circuits having contact tubes led through a cover plate,
b) there are provided exchangeable templates (7) which can be placed on the cover plate (4) and by means of which there can be released only the contact tubes (5) required for the respective experiment, and
c) there are provided electric modules (6) supplied with symbols, which electric modules can be plugged into the contact tubes (5) and, together with the cover templates (7), produce an optical image of the respective experimental circuit.

3. Teaching system according to claim 1, in which the correct positioning of the training cases (9) in the cabinet (10) can be checked.

4. Teaching system according to claim 2, in which the electric power supply is automatically cut off when the lid of the training case (9) is closed.

5. Teaching system according to claim 2, in which the power supply (14) and the electric modules (6) are protected against overloading.

6. Teaching system according to claim 2, in which the operating and/or charging state can be indicated optically by means of light-emitting diodes (15) [sic] on the training case (9).

7. Teaching system according to claim 2, in which an additional terminal (16) for operation by way of a power supply unit is provided on the training case (9).

8. Teaching system according to claim 2, in which a display for representing time-dependent analog and digital electrical quantities (mini-oscilloscope) and/or a digital measuring instrument are arranged in the training case.

9. Teaching device according to claim 2, in which, with the basic training cases, the modules (6) comprise at least one electric switch which has a standard optical indication of the operating state.

10. Teaching device according to claim 1, in which at least some of the recharging power is obtained from solar cells.

11. Teaching device according to claim 10, in which a central solar module and/or solar cells are provided for individual training cases.

## Revendications

1. Système d'enseignement de l'électronique et de l'électrotechnique, dans lequel :
a) il est prévu une pluralité de mallettes (9) électroniques portatives d'enseignement,
b) il est prévu au moins une armoire (10) ou un rayonnage, dans laquelle ou dans lequel les mallettes (9) d'enseignement peuvent être placées de manière ordonnée,
c) les mallettes d'enseignement peuvent fonctionner à l'aide de batteries (14) électriques rechargeables et
d) les mallettes (9) d'enseignement peuvent être raccordées à un dispositif (11) de recharge électrique des batteries par placement dans l'armoire (10).

2. Système d'enseignement suivant la revendication 1, dans lequel il est prévu dans la mallette (9) d'enseignement
a) des circuits précâblés comportant des douilles de contact passant dans une plaque de couverture,
b) des gabarits (7) de couverture interchangeables, qui peuvent être posés sur la plaque (4) de couverture et par lesquels ne sont dégagées que les douilles (5) de contact nécessaires à l'essai considéré et
c) des composants (6) électriques, qui sont munis de symboles, qui peuvent être enfichés dans les douilles (5) de contact et qui donnent, conjointement avec les gabarits (7) de couverture une représentation visuelle du circuit d'essai considéré.

3. Système d'enseignement suivant la revendication 1, dans lequel le placement ordonné des mallettes (9) d'enseignement dans l'armoire (10) peut être contrôlé.

4. Système d'enseignement suivant la revendication 2, dans lequel l'alimentation en courant électrique est automatiquement débranchée à la fermeture du couvercle de la mallette (9) d'enseignement.

5. Système d'enseignement suivant la revendication 2, dans lequel l'alimentation (14) en courant et les composants électriques (6) sont protégés contre une surcharge.

6. Système d'enseignement suivant la revendication 2, dans lequel l'état de fonctionnement et/ou l'état de charge peut être affiché optiquement par des diodes (15) électroluminescentes sur la mallette (9) d'enseignement.

7. Système d'enseignement suivant la revendication 2, dans lequel il est prévu dans la mallette (9) d'enseignement une borne (16) supplémentaire pour un fonctionnement par une alimentation par le réseau.

8. Système d'enseignement suivant la revendication 2, dans lequel un écran pour la visualisation de grandeurs électriques analogiques et numériques dépendant du temps (Minioscilloscope) et/ou un appareil de mesure numérique sont montés dans la mallette d'enseignement.

9. Appareil d'enseignement suivant la revendication 2, dans lequel les composants (6) comportent, pour les mallettes d'enseignement de base, au moins un interrupteur électrique, qui comporte un voyant lumineux en conformité avec les normes, de l'état de fonctionnement.

10. Appareil d'enseignement suivant la revendication 1, dans lequel au moins une partie de l'énergie de recharge est obtenue à partir de cellules solaires.

11. Appareil d'enseignement suivant la revendication 10, dans lequel il est prévu un module solaire central et/ou des cellules solaires pour diverses mallettes d'enseignement.
